# EUROPEAN PATENT APPLICATION

(11) **EP 4 147 581 A1**
(43) Date of publication of application: **15.03.2023**
(21) Application number: 20934406.8
(22) Date of filing: 07.05.2020
(51) Int. Cl.: A23L 5/00, A23L 5/10, A23L 7/157, A23D 9/00

(54) **PROCESSED EDIBLE POWDER, METHOD FOR MANUFACTURING PROCESSED EDIBLE POWDER, FRIED-FOOD COATING MATERIAL, METHOD FOR MANUFACTURING FRIED-FOOD COATING MATERIAL, AND METHOD FOR IMPROVING MOUTHFEEL OF FRIED-FOOD COATING MATERIAL**

(71) Applicant: Nihon Shokuhin Kako Co., Ltd., Tokyo 100-0005 (JP)
(72) Inventor: MORIMOTO Kazuki, Fuji-shi, Shizuoka 417-8530 (JP); TAKAGUCHI Hitoshi, Fuji-shi, Shizuoka 417-8530 (JP)
(74) Representative: Dehns
(86) International application number: PCT/JP2020/018559
(87) International publication number: WO 2021/224964

(57) **Abstract**

Provided are: a processed edible powder that, when used in a fried-food coating material, makes it possible to improve the mouthfeel of the coating to a desired mouthfeel that undergoes little deterioration over time, has excellent crispness, and is crunchy; a method for manufacturing said processed edible powder; a fried-food coating material in which said processed edible powder is used; a method for manufacturing said fried-food coating material; and a method for improving the mouthfeel of the fried-food coating material. An oil and fat fixation agent is mixed into an edible powder formed from a starchy and/or fibrous raw material to obtain a processed edible powder. Using the processed edible powder as a raw material in a fried-food coating material makes it possible to obtain a fried food having a desired coating mouthfeel that undergoes little deterioration over time, has excellent crispness, and is crunchy.

## Description

### TECHNICAL FIELD

The present invention relates to a processed edible powder that is suitable as a raw material for a fried-food coating, and a method for manufacturing the processed edible powder. The present invention also relates to a fried-food coating that uses the processed edible powder, a method for manufacturing the foodfried-food coating, and a method for improving the texture of the fried-food coating.

### BACKGROUND ART

Wheat flour is mainly used for fried-food coatings such as breader powder and batter liquid, and various proteins, starches, emulsifiers, eggs, baking soda, etc., are added for the purpose of improving texture. However, such conventional coatings have had problems in that the coating easily comes off due to poor adhesion to the pieces of food, the coating does not easily dissolve uniformly when made into a batter solution, and in terms of texture, the crispy texture of the coating deteriorates over time. Various proposals have been made to solve these problems.

For example, there is a known technique relating to an oil and fat processed starch obtained by adding and mixing oil and fat into starch and aging the mixture, and the used coating substance of the oil and fat and starch has been improved in order to further enhance, *inter alia,* the texture of food products, adhesion of the fried-food coating with the ingredients, and workability when the oil and fat processed starch is mixed with water and/or oil. Examples include, *inter alia,* techniques using characteristic oils and fats, and techniques using substances other than oils and fats, and techniques such as the following are reported.

Patent Document 1 listed below indicates that a viscoelastic oil and fat processed starch having exceptional aging resistance is obtained by adding oil and fat having an iodine value of 130 or more to starch.

Patent Document 2 listed below indicates that a fried-food in which the binding coating does not peel off or swell and which has a soft, non-sticky, exceptional texture is obtained by adding and uniformly mixing edible oil and fat in which the total content of trivalent or higher unsaturated fatty acid (triene-unsaturated acid, tetraene-unsaturated acid, pentaene-unsaturated acid, hexaene-unsaturated acid) is 15% by mass or more into starch and/or flour, then heat-aging the mixture, and using the resulting oil and fat processed starch as a fried-food coating.

Patent Document 3 listed below indicates that an oil and fat processed starch having both a thickening and stabilizing effect and an emulsifying ability is obtained by adding, to starch, oil and fat having a total content of 60% by mass or more in saturated fatty acid and monounsaturated fatty acid, and performing a heat aging treatment until the oil phase disappears in an emulsifying power measurement test.

Patent Document 4 listed below indicates that a fried-food having good adhesion between the ingredients and the coating is obtained by using, in a fried-food coating, an oil and fat processed starch, obtained by compounding starch with oil and fat and a glycerin organic fatty acid ester.

Patent Document 5 listed below indicates that an oil and fat processed starch having little oil and fat oxidation odor is obtained by adding oil and fat, an analogue of oil and fat, a fatty acid, or a derivative of any of these, or a mixture of two or more of any of these to starch, and allowing lipoxygenase to act thereon, and using this oil and fat processed starch provides good adhesion between the ingredients of fried-foods and the coating and a crispy, soft, texture without impairing flavor.

In addition, techniques such as the following have been reported as techniques relating to fried-food coatings other than oil and fat processed starch.

Patent Document 6 listed below indicates that it is possible to obtain exceptional flavor and texture, similar to what is experienced immediately after frying, in a fried-food that has been cooked with heat using a microwave cooker, etc., after refrigeration or frozen storage, by using a fried-food mix powder containing a polyglycerin fatty acid ester which is in the form of a powder having a particle size of 500 *µ*m or less, and in which the main constituent fatty acid is palmitic acid and/or stearic acid and the esterification rate is in the range of 30-70%.

Patent Document 7 listed below indicates that a fried-food that is easily fried, does not leave a pasty substance in the batter, does not have a sticky texture, and has an exceptional texture such as crispiness is obtained by using a fried-food batter mix in which the untreated starch content is 40% by weight or more, the fried-food batter mix characterized by containing diacetyl tartaric acid monoglyceride.

### [Related Art Documents]

### [Patent Documents]

[Patent Document 1] Japanese Laid-Open Patent Application No. S54-11247
[Patent Document 2] Japanese Laid-Open Patent Application No. 2004-113236
[Patent Document 3] Japanese Laid-Open Patent Application No. 2010-259399
[Patent Document 4] Japanese Laid-Open Patent Application No. 2005-185122
[Patent Document 5] Japanese Laid-Open Patent Application No. 2000-106832
[Patent Document 6] Japanese Laid-Open Patent Application No. 2002-10746
[Patent Document 7] Japanese Laid-Open Patent Application No. 2001-25370

### DISCLOSURE OF THE INVENTION

### [Problems the Invention is Intended to Solve]

However, although the oil and fat processed starch described above has the effect of enhancing adhesion between the coating and the ingredients when used in a fried-food coating, the starch has not exhibited adequate effects of improving the texture of the coating to a desired texture that has excellent crispiness and is crunchy, and of keeping the texture of the coating from deteriorating over time. In addition, many techniques for improving the texture of a coating, such as the methods of Patent Documents 6 and 7, have been disclosed among methods other than those that use an oil and fat processed starch, but have not produced adequate effects.

It is therefore an object of the present invention to provide: a processed edible powder that, when used in a fried-food coating, makes it possible to improve the texture of the coating to a desired texture that undergoes little deterioration over time, makes excellent crispiness, and has pleasant crunchy texture; a method for manufacturing said processed edible powder; a fried-food coating in which said processed edible powder is used; a method for manufacturing a fried-food coating; and a method for improving the texture of a fried-food coating.

### [Means for Solving the Problems]

As a result of thoroughgoing studies intended to solve the problems described above, the inventors perfected the present invention by discovering that when an edible powder formed from a starchy and/or fibrous raw material containing an oil and fat solidifier is used as a raw material for a fried-food coating, a fried-food having a desired coating texture that undergoes little deterioration over time, makes excellent crispiness, and has pleasant crunchy texture is obtained.

Specifically, the present invention according to a first aspect provides a processed edible powder characterized in that the powder contains an edible powder formed from a starchy and/or fibrous raw material, and an oil and fat solidifier mixed with the edible powder.

The processed edible powder provided by the present invention preferably contains 0.01-20 parts by mass of the oil and fat solidifier per 100 parts by mass of the edible powder.

In the processed edible powder provided by the present invention, preferably, after 20.0 g of the oil and fat solidifier has been added to 20.0 g of canola oil and the resulting combination has been heated in a boiling water bath for 20 minutes, the viscosity of the resulting oil and fat mixture when cooled to 25°C in a resting state is 340 mPa·s or more, or said resulting oil and fat mixture makes gelation gels.

In the processed edible powder provided by the present invention, preferably, after 2.0 g of the oil and fat solidifier has been added to 38.0 g of canola oil and the resulting combination has been heated in a boiling water bath for 10 minutes, the viscosity of the resulting oil and fat mixture when cooled to 25°C in a resting state is 170 mPa·s or more, or said resulting oil and fat mixture makes gelation.

The present invention according to a second aspect provides a method for manufacturing a processed edible powder, characterized in that an oil and fat solidifier is mixed with an edible powder formed from a starchy and/or fibrous raw material.

In the method for manufacturing a processed edible powder provided by the present invention, preferably, 0.01-20 parts by mass of the oil and fat solidifier is mixed with 100 parts by mass of the edible powder.

In the method for manufacturing a processed edible powder provided by the present invention, preferably, after 20.0 g of the oil and fat solidifier has been added to 20.0 g of canola oil and the resulting combination has been heated in a boiling water bath for 20 minutes, the viscosity of the resulting oil and fat mixture when cooled to 25°C in a resting state is 340 mPa·s or more, or said resulting oil and fat mixture makes gelation.

In the method for manufacturing a processed edible powder provided by the present invention, preferably, after 2.0 g of the oil and fat solidifier has been added to 38.0 g of canola oil and the resulting combination has been heated in a boiling water bath for 10 minutes, the viscosity of the resulting oil and fat mixture when cooled to 25°C in a resting state is 170 mPa·s or more, or said resulting oil and fat mixture makes gelation.

In the method for manufacturing a processed edible powder provided by the present invention, preferably, the oil and fat solidifier is fluidized and mixed with the edible powder.

The present invention according to a third aspect provides a fried-food coating characterized in that the processed edible powder described above is contained.

The present invention according to a fourth aspect provides a method for manufacturing a fried-food coating, characterized in that the method involves compounding a processed edible powder obtained through the above-described method for manufacturing a processed edible powder.

The present invention according to a fifth aspect provides a method for improving the texture of a fried-food coating, characterized in that the processed edible powder described above is added.

The present invention according to a sixth aspect provides a method for improving the texture of a fried-food coating, characterized in that the processed edible powder obtained through the above-described method for manufacturing a processed edible powder is added.

According to the present invention, by using the processed edible powder described above as a raw material for a fried-food coating, it is possible to obtain a fried-food having a desired coating texture that undergoes little deterioration over time, makes excellent crispiness and lightness texture.

### MODE FOR CARRYING OUT THE INVENTION

In the present invention, the phrase "edible powder formed from a starchy and/or fibrous raw material" means an edible powder manufactured using a starchy and/or fibrous raw material derived from plants.

In the above description, possible examples of an edible powder manufactured using a fibrous raw material include cellulose powder, soybean fiber, ground bran, citrus fiber, etc. Of these, ground bran and/or citrus fiber are/is preferred for popularity and cost.

The edible powder manufactured using a starchy raw material can be starchy powder that can be used as food and is not particularly limited; for example, starches such as tapioca starch, potato starch, corn starch, wheat starch, rice starch, sweet potato starch, mung bean starch, pea starch, potato starch, kudzu starch, bracken starch, sago starch, and starch of the plant *Cardiocrinum cordatum* var. *glehnii* can be used. Flours such as cake flour, medium-strength flour, strong flour, whole wheat flour and other types of wheat flour, rice flour, buckwheat flour, soybean flour, mung bean flour, pea flour, corn flour, barley flour, rye flour, adlay flour, Japanese millet flour, and foxtail millet flour, which are ground grains containing starch, can also be used. Of these examples, cornstarch, rice starch, legume starch, and/or cake flour, which have low stringiness, are preferred in terms of texture when heated, and cornstarch in particular is preferred in terms of quality and popularity. In any starchy edible powder, in addition to powders derived from ordinary grains, powders derived from grains improved by breeding or genetic engineering methods, such as nonglutinous species, waxy species, and high-amylose species, may be used. Furthermore, in the present invention, it is also possible to use a material that has undergone various processing treatments as the starchy raw material. Specifically, an edible powder subjected to chemical modification treatments such as oxidation treatment, esterification treatment, etherification treatment, and cross-linking treatment, and processing treatments such as pregelatinization treatment, granulation treatment, moist heat treatment, ball mill treatment, pulverization treatment, heat treatment, hot water treatment, bleaching treatment, sterilization treatment, acid treatment, alkali treatment, and enzyme treatment, or two or more of these treatments, may be used as the starchy raw material. Among these processing treatments, cross-linked starch is preferred and phosphate cross-linked starch is particularly preferred when used as a fried-food coating.

The oil and fat solidifier (also referred to as the oil and fat gelling agent) used in the present invention may be any oil and fat solidifier and is not subject to any particular limitation as long as the agent has the function of, *inter alia,* thickening liquid oil and fat or changing the liquid to a cream or gel, or the function of increasing the hardness of solid oil and fat at room temperature, when dissolved in oil and fat. The term "gel(s)" in the present specification refers to a state in which a liquid becomes highly viscous and no longer fluid. Possible examples of the oil and fat solidifier include, specifically, substances having the ability to solidify oil and fat such as is described above, among such as fatty acids, fatty acid salts, hydrogenated oils and fats, glycerin fatty acid esters, sucrose fatty acid esters, polyglycerin fatty acid esters, and dextrin fatty acid esters. Two or more types of the oil and fat solidifiers can be used in combination.

The oil and fat solidifier of the present invention is preferably one in which, when 20.0 g of the oil and fat solidifier is added to 20.0 g of canola oil and the resulting combination has been heated in a boiling water bath for 20 minutes and then cooled in a resting state to 25°C, the viscosity of the resulting oil and fat mixture is 340 mPa·s or more and preferably 500 mPa·s or more, or the resulting oil and fat mixture makes gelation. The oil and fat solidifier of the present invention is more preferably one in which, when 2.0 g of the oil and fat solidifier is added to 38.0 g of canola oil and the resulting combination has been heated in a boiling water bath for 20 minutes and then cooled in a resting state to 25°C, the viscosity of the resulting oil and fat mixture is 170 mPa·s or more and preferably 180 mPa·s or more, or the resulting oil and fat mixture makes gelation.

In the present invention, the viscosity measured as described above is a value of viscosity measured when a TVB10 viscometer (Toki Sangyo Co., Ltd.) is used, the speed of the rotor is set to 30 rpm, and the rotor is caused to rotate for 30 seconds, as shown in the examples described hereinafter. The canola oil used when the viscosity is measured as described above has an iodine value of 94-126.

The processed edible powder in the present invention is obtained by adding and mixing an oil and fat solidifier into an edible powder formed from a starchy and/or fibrous raw material. The oil and fat solidifier is preferably added and mixed in after being fluidized by a method such as heating or pressurizing the oil and fat solidifier. By fluidizing and then adding and mixing in the oil and fat solidifier, the oil and fat solidifier can be more uniformly dispersed in the processed edible powder and more effectively dispersed in the coating.

In the present invention, the amount of the oil and fat solidifier added to the edible powder is preferably 0.01-20% by mass and more preferably 0.05-10% by mass relative to the edible powder before the oil and fat solidifier is added. If the amount is less than 0.01% by mass, it may be difficult to obtain the effect of improving the texture of the coating. If the amount is greater than 20% by mass, the edible powder has lower powder fluidity, caking of the powder, etc., may make it more difficult to sieve and apply a coating of the powder, and there may be an undesired taste quality due to the oil and fat solidifier.

The oil and fat solidifier used in the present invention may be used after mixing in, *inter alia,* oil and fat, alcohols, and/or esters such as emulsifiers, as long as the object of the present invention is not impaired.

Possible examples of the oil and fat include oil and fat, prepared oil, mixtures thereof, etc., recognized as edible, e.g., flaxseed oil, perilla oil, walnut oil, safflower oil, grape oil, soybean oil, sunflower oil, corn oil, cottonseed oil, sesame oil, rapeseed oil, canola oil, peanut oil, olive oil, palm oil, coconut oil, shortening, beef tallow, lard, chicken fat, mutton fat, whale oil, fish oil, and processed oils thereof such as fractionated oils, deodorized oils, heated oils, hydrogenated oils, and transesterified oils. Possible examples of the alcohols include ethanol, glycerin, propylene glycol, lower alcohols, higher alcohols, etc. Possible examples of the esters include glycerin fatty acid ester, polyglycerin fatty acid ester, organic acid monoglyceride, sorbitan fatty acid ester, propylene glycol fatty acid ester, sucrose fatty acid ester, lecithin, etc., which have no oil and fat solidifying ability. In addition, combinations of these examples may be used.

The processed edible powder of the present invention may contain the above-described oil and fat and/or emulsifier in addition to the oil and fat solidifier, as long as the object of the present invention is not impaired.

The processed edible powder of the present invention can be used after being blended with various foods. There are no particular limitations on the type of food; the processed edible powder can be used with foods such as fried-foods which use batter or breader powder as the fried-food coating, meats, solid or gel-form foods and processed marine products such as aquatic and livestock meat products, noodles, and breads.

Of these foods, the processed edible powder is suitable as a raw material for a fried-food coating because of the effect of improving the texture of the coating to a desired coating texture that undergoes little deterioration over time, makes excellent crispiness and lightness texture.

Specifically, the fried-food coating of the present invention is characterized in containing the processed edible powder described above. The fried-food coating of the present invention can be used as, for example, mixed powder for batter, breader powder, *kara-age* powder, etc.

Examples of fried-foods include *kara-age,* tempura, *tatsuta-age,* fried chicken, chicken cutlets, pork cutlets, beef cutlets, mince cutlets, croquettes, fried shrimp, squid rings, fritters, etc. The fried-foods in the present invention are not limited to foods fried in oil, and may be non fried-foods that are cooked using a frying pan, microwave oven, oven, oven range, convention oven, convection oven, etc.

The amount of the processed edible powder of the present invention added to food should be set as appropriate depending on the type of food, but in the case of a fried-food coating, the total raw material such as mixed powder for batter, breader powder, dusting powder, and *kara-age* powder would preferably contain 0.1-100% by mass, more preferably 1-90% by mass, and most preferably 10-80% by mass of the processed edible powder in terms of dry matter.

Furthermore, the processed edible powder of the present invention can be used as a texture improver for afried-food coating. Specifically, adding the processed edible powder of the present invention has the effect of improving the texture of the coating to a desired coating texture that undergoes little deterioration over time, makes excellent crispiness and lightness texture.

### [Examples]

The present invention shall be described in detail below with reference to examples, but the technical scope of the present invention is not limited to the following examples. In the present specification, unless otherwise specified, references to percentages, parts, etc., are based on mass, and numerical ranges are inclusive of the endpoints thereof.

### [Measurement 1 of viscosity of oil and fat containing oil and fat solidifier]

20.0 g of canola oil and 20.0 g of each material listed in Table 1 or Table 2 were weighed into a 50 mL plastic conical tube, the materials were dissolved by heating while mixing inverted as appropriate for 20 minutes in a boiling water bath, and a mixture was prepared. After the end of heating, the prepared mixture was left to rest for 20 hours in a constant-temperature bath set to 25°C. After the mixture was left to rest, a TVB10 viscometer was used (Toki Sangyo Co., Ltd.), the rotor was set to a speed of 30 rpm and caused to rotate for 30 seconds, and the viscosity was measured. The rotor was changed to an appropriate rotor required by the equipment in accordance with the viscosity of the sample; TM1 was selected for a viscosity of 0-200 mPa·s, TM2 was selected for a viscosity of 200-1000 mPa·s, TM3 was selected for a viscosity of 1000-4000 mPa·s, and TM4 was selected for a viscosity of 4000-20000 mPa·s. The measurement results are shown in Tables 1 and 2.

**[Table 1]**

| Material Name | Viscosity (mPa·s) |
|---|---|
| Canola oil | 140 |
| Glycerin fatty acid ester A | impossible to measure (due to gelling) |
| Glycerin fatty acid ester B | impossible to measure (due to gelling) |
| Glycerin fatty acid ester C | 140 |
| Sucrose fatty acid ester A | impossible to measure (due to gelling) |
| Sucrose fatty acid ester B | 140 |
| Hydrogenated coconut oil | 550 |

**[Table 2]**

| Material Name | Viscosity (mPa·s) |
|---|---|
| Glycerin fatty acid ester ("POEM DES-70V," by Riken Vitamin Co., Ltd.) | impossible to measure (due to gelling) |
| Sucrose fatty acid ester ("RYOTO Sugar Ester B-370F," by Mitsubishi Chemical Corporation) | impossible to measure (due to gelling) |
| Hydrogenated palm oil (by Yokozeki Oil Industry Co., Ltd.) | impossible to measure (due to gelling) |
| Glycerin fatty acid ester ("SY-Glyster P0-5S," by Sakamoto Pharmaceutical Co., Ltd.) | 190 |
| Sucrose fatty acid ester ("RYOTO Sugar Ester 0-170," by Mitsubishi Chemical Corporation) | 140 |

### [Measurement 2 of viscosity of oil and fat containing oil and fat solidifier]

38.0 g of canola oil and 2.0 g of each material listed in Table 3 or Table 4 were weighed into a 50 mL plastic conical tube, the materials were dissolved by heating while mixing inverted as appropriate for 10 minutes in a boiling water bath, and a mixture was prepared. After the end of heating, the prepared mixture was left to rest for 20 hours in a constant-temperature bath set to 25°C. After the mixture was left to rest, a TVB10 viscometer (Toki Sangyo Co., Ltd.) was used, the rotor was set to a speed of 30 rpm and caused to rotate for 30 seconds, and the viscosity was measured. The rotor was changed to an appropriate rotor required by the equipment in accordance with the viscosity of the sample; TM1 was selected for a viscosity of 0-200 mPa·s, TM2 was selected for a viscosity of 200-1000 mPa·s, TM3 was selected for a viscosity of 1000-4000 mPa·s, and TM4 was selected for 4000-20000 mPa·s. The measurement results are shown in Tables 3 and 4.

**[Table 3]**

| Material Name | Viscosity (mPa·s) |
|---|---|
| Canola oil | 140 |
| Glycerin fatty acid ester A | 9860 |
| Glycerin fatty acid ester B | 18870 |
| Glycerin fatty acid ester C | 140 |
| Sucrose fatty acid ester A | 200 |
| Sucrose fatty acid ester B | 140 |
| Hydrogenated coconut oil | 140 |

**[Table 4]**

| Material Name | Viscosity (mPa·s) |
|---|---|
| Glycerin fatty acid ester ("POEM DES-70V," by Riken Vitamin Co., Ltd.) | 920 |
| Sucrose fatty acid ester ("RYOTO Sugar Ester B-370F," by Mitsubishi Chemical Corporation) | 220 |
| Hydrogenated palm oil (by Yokozeki Oil Industry Co., Ltd.) | 610 |
| Glycerin fatty acid ester ("SY-Glyster P0-5S," by Sakamoto Pharmaceutical Co., Ltd.) | 140 |
| Sucrose fatty acid ester ("RYOTO Sugar Ester 0-170," by Mitsubishi Chemical Corporation) | 140 |

It is understood from Table 1 that even among esters with the same substance name, there are those that have oil-and-fat-solidifying ability and those that do not, and that the oil-and-fat-solidifying ability differs from material to material. It is understood from Table 3 that there are oil and fat solidifiers that are not confirmed to increase the viscosity of oil and fat when the concentration is low, such as hydrogenated coconut oil. It is understood from Tables 2 and 4 that oil and fat solidifiers having a given viscosity are available from a random selection of commercially available emulsifiers and oils and fats.

### [Preparation of processed edible powder]

### (Working product 1)

18.0 parts by mass of canola oil and 2.0 parts by mass of glycerin fatty acid ester A were weighed into a 50 mL plastic conical tube, the materials were heated while mixing inverted as appropriate for 10 minutes in a boiling water bath, and an oil and fat mixture was prepared. 10 parts by mass of the oil and fat mixture prepared immediately after the heating was added to 100 parts by mass of cornstarch dry mass and uniformly mixed in a mortar, and a processed edible powder (working product 1) was obtained.

### (Working product 2)

Aside from using glycerin fatty acid ester B instead of glycerin fatty acid ester A in working product 1, a processed edible powder (working product 2) was obtained in the same manner as working product 1.

### (Working product 3)

Aside from using sucrose fatty acid ester A instead of glycerin fatty acid ester A in working product 1, a processed edible powder (working product 3) was obtained in the same manner as working product 1.

### (Working product 4)

Aside from using hydrogenated coconut oil instead of glycerin fatty acid ester A in working product 1, a processed edible powder (working product 4) was obtained in the same manner as working product 1.

### (Working product 5)

Aside from using pea starch instead of cornstarch in working product 1, a processed edible powder (working product 5) was obtained in the same manner as working product 1.

### (Working product 6)

Aside from using mung bean starch instead of cornstarch in working product 1, a processed edible powder (working product 6) was obtained in the same manner as working product 1.

### (Working product 7)

Aside from using high-amylose cornstarch instead of cornstarch in working product 1, a processed edible powder (working product 7) was obtained in the same manner as working product 1.

### (Working product 8)

Aside from using wheat starch instead of cornstarch in working product 1, a processed edible powder (working product 8) was obtained in the same manner as working product 1.

### (Working product 9)

Aside from using rice starch instead of cornstarch in working product 1, a processed edible powder (working product 9) was obtained in the same manner as working product 1.

### (Working product 10)

Aside from using cake flour instead of cornstarch in working product 1, a processed edible powder (working product 10) was obtained in the same manner as working product 1.

### (Working product 11)

Aside from using rice flour instead of cornstarch in working product 1, a processed edible powder (working product 11) was obtained in the same manner as working product 1.

### (Working product 12)

Water was added to tapioca to make a slurry containing 30-40% by mass of tapioca. After heating the slurry to 30°C, 2 parts by mass of sodium sulfate was dissolved with 100 parts by mass of dry starch. Furthermore, after sodium hydroxide was added to adjust the pH to 11-12, 0.02 parts by mass of phosphoryl chloride was added to 100 parts by mass of dry starch and a reaction was brought about for 1 hour. Next, sulfuric acid was added to adjust the pH to 5-6, and the contents were subsequently washed with water and dehydrated. Aside from using phosphate-crosslinked tapioca obtained by this method instead of the cornstarch of working product 1, a processed edible powder (working product 12) was obtained in the same manner as working product 1.

### (Working product 13)

Aside from changing the added amount of phosphoryl chloride of working product 12 to 0.5 parts by mass, a processed edible powder (working product 13) was obtained in the same manner as working product 12.

### (Working product 14)

1 part by mass of heat-dissolved glycerin fatty acid ester A was added to 100 parts by mass of dry cornstarch and uniformly mixed in a mortar, and a processed edible powder (working product 14) was obtained.

### (Working product 15)

Aside from changing the added amount of glycerin fatty acid ester A of working product 14 to 0.1 parts by mass, a processed edible powder (working product 15) was obtained in the same manner as working product 14.

### (Working product 16)

1 part by mass of heat-dissolved glycerin fatty acid ester A was added to 100 parts by mass of dry citrus fiber and uniformly mixed in a mortar, and a processed edible powder (working product 16) was obtained.

### (Comparative product 1)

Cornstarch was used as comparative product 1.

### (Comparative product 2)

Aside from using canola oil instead of the glycerin fatty acid ester A of working product 1, comparative product 2 was obtained in the same manner as working product 1.

### (Comparative product 3)

Aside from using glycerin fatty acid ester C instead of the glycerin fatty acid ester A of working product 1, comparative product 3 was obtained in the same manner as working product 1.

### (Comparative product 4)

Aside from using sucrose fatty acid ester B instead of the glycerin fatty acid ester A of working product 1, comparative product 4 was obtained in the same manner as working product 1.

### (Comparative product 5)

Aside from using canola oil instead of the glycerin fatty acid ester A of working product 1 and using pea starch instead of cornstarch, comparative product 5 was obtained in the same manner as working product 1.

### (Comparative product 6)

Aside from using canola oil instead of the glycerin fatty acid ester A of working product 1 and using mung bean starch instead of cornstarch, comparative product 6 was obtained in the same manner as working product 1.

### (Comparative product 7)

Aside from using canola oil instead of the glycerin fatty acid ester A of working product 1 and using high-amylose cornstarch instead of cornstarch, comparative product 7 was obtained in the same manner as working product 1.

### (Comparative example 8)

Aside from using canola oil instead of the glycerin fatty acid ester A of working product 1 and using wheat starch instead of cornstarch, comparative product 8 was obtained in the same manner as working product 1.

### (Comparative product 9)

Aside from using canola oil instead of the glycerin fatty acid ester A of working product 1 and using rice starch instead of cornstarch, comparative product 9 was obtained in the same manner as working product 1.

### (Comparative product 10)

Aside from using canola oil instead of the glycerin fatty acid ester A of working product 1 and using cake flour instead of cornstarch, comparative product 10 was obtained in the same manner as working product 1.

### (Comparative product 11)

Aside from using canola oil instead of the glycerin fatty acid ester A of working product 1 and using rice flour instead of cornstarch, comparative product 11 was obtained in the same manner as working product 1.

### (Comparative product 12)

Aside from using canola oil instead of the glycerin fatty acid ester A of working product 1 and using the phosphate-crosslinked tapioca obtained by the method of working product 15 instead of cornstarch, comparative product 12 was obtained in the same manner as working product 1.

### (Comparative product 13)

Aside from using canola oil instead of the glycerin fatty acid ester A of working product 1 and using the phosphate-crosslinked tapioca obtained by the method of working product 16 instead of cornstarch, comparative product 13 was obtained in the same manner as working product 1.

### (Comparative product 14)

An oil and fat solidifier was mixed with an edible flour without being fluidized to prepare a processed edible powder. Specifically, 18.0 parts by mass of canola oil and 2.0 parts by mass of glycerin fatty acid ester A were weighed into a 50 mL plastic conical tube and mixed inverted as appropriate, and an oil and fat mixture was prepared. 10 parts by mass of the oil and fat mixture was added to 100 parts by mass of dry cornstarch and mixed uniformly in a mortar, and a processed edible powder (comparative product 14) was obtained.

### (Comparative product 15)

An oil and fat solidifier was mixed with an edible flour without being fluidized to prepare a processed edible powder. Specifically, 1 part by mass of powdered glycerin fatty acid ester A (not heat-melted) was added to 100 parts by mass of dry cornstarch and uniformly mixed in a mortar, and a processed edible powder (comparative product 15) was obtained.

### (Comparative product 16)

Citrus fiber was used as comparative product 16.

### [Test example 1: Kara-age (breader method, evaluation of starch quality)]

100 parts by mass of working products 1-15 and comparative products 1-15 and 100 parts by mass of commercially available *kara-age* powder were mixed, and mixed powders were prepared. In each case, 0.4 parts by mass of xanthan gum and 130 parts by mass of ice-cold water were stirred into 100 parts by mass of the prepared mixed powder using a whipper to prepare a batter. Next, chicken breast meat with the skin and fat trimmed off was cut into 20 g pieces, 10 pieces of cut chicken breast meat and 20 g of the prepared mixed powder were mixed in a plastic bag with a zipper, and the chicken pieces were covered in powder. The powder-covered chicken breast meat was then covered in the prepared batter so that the amount of batter was 40% of the amount of meat, the prepared mixed powder was then uniformly sprinkled over all the pieces of meat, the pieces of meat were fried at 175°C for 4 minutes using refined soybean oil , and *kara-age* was prepared.

### (Texture evaluation)

After leaving the *kara-age* prepared using each method at room temperature for 30 minutes after frying, the texture of the coating was evaluated. In addition, 200 g of cooked rice was spread flat in a heat-resistant plastic container (inner diameter W 130 mm × L 130 mm × H 65 mm), *kara-age* that had been left at room temperature for 2 hours after frying was placed on the rice, the container was sealed and microwaved at 1500 W for 1 minute, and the texture of the coating was evaluated. For the texture evaluation, the following items were evaluated.

### (Texture: crispiness)

As an evaluation criterion for crispiness, *kara-age* coating having a crispiness texture was evaluated as good. As an evaluation point criterion, very strong crispiness was given 5 points, fairly strong crispiness was given 4 points, moderate crispiness was given 3 points, slight crispiness was given 2 points, and no crispiness was given 1 point.

### (Texture: lightness)

As an evaluation criterion for lightness, *kara-age* coating having good lightness and no rubber-like chewy texture was evaluated as good. As an evaluation point criterion, food having fairly good lightness and no distracting texture at all was given 5 points, food having good lightness and mostly no distracting texture was given 4 points, food having slightly poor lightness and a distracting texture in places was given 3 points, food having bad lightness and a distracting texture was given 2 points, and food having very poor lightness and a strong distracting texture was given 1 point.

The texture evaluations were carried out by five skilled panel members, and the evaluation results were displayed as average scores (rounded off to the second decimal place). The results are shown in Table 5.

**[Table 5]**

| | Sample Name | After 30 min frying | | After microwaving | |
|---|---|---|---|---|---|
| | | Crispiness | Lightness | Crispiness | Lightness |
| W. ex. 1 | W. pro. 1 | 4.2 | 4.4 | 4.0 | 4.0 |
| W. ex. 2 | W. pro. 2 | 4.2 | 3.8 | 4.2 | 3.6 |
| W. ex. 3 | W. pro. 3 | 4.6 | 4.2 | 4.0 | 4.2 |
| W. ex. 4 | W. pro. 4 | 3.2 | 3.0 | 2.6 | 2.6 |
| W. ex. 5 | W. pro. 5 | 4.4 | 4.6 | 4.2 | 4.2 |
| W. ex. 6 | W. pro. 6 | 4.6 | 4.8 | 4.6 | 4.6 |
| W. ex. 7 | W. pro. 7 | 4.6 | 4.6 | 4.2 | 4.0 |
| W. ex. 8 | W. pro. 8 | 4.2 | 4.0 | 4.0 | 4.0 |
| W. ex. 9 | W. pro. 9 | 4.0 | 4.0 | 3.8 | 3.8 |
| W. ex. 10 | W. pro. 10 | 3.8 | 3.6 | 3.6 | 3.6 |
| W. ex. 11 | W. pro. 11 | 3.8 | 4.6 | 3.6 | 4.0 |
| W. ex. 12 | W. pro. 12 | 3.8 | 4.2 | 3.8 | 3.8 |
| W. ex. 13 | W. pro. 13 | 4.8 | 4.8 | 4.8 | 4.6 |
| W. ex. 14 | W. pro. 14 | 4.2 | 4.2 | 4.0 | 4.0 |
| W. ex. 15 | W. pro. 15 | 4.0 | 4.2 | 4.0 | 3.8 |
| C. ex. 1 | C. pro. 1 | 1.4 | 1.6 | 1.0 | 1.0 |
| C. ex. 2 | C. pro. 2 | 1.8 | 1.6 | 1.4 | 1.0 |
| C. ex. 3 | C. pro. 3 | 2.0 | 1.4 | 1.2 | 1.4 |
| C. ex. 4 | C. pro. 4 | 1.2 | 1.2 | 1.0 | 1.0 |
| C. ex. 5 | C. pro. 5 | 2.4 | 2.6 | 1.6 | 1.6 |
| C. ex. 6 | C. pro. 6 | 2.6 | 2.4 | 2.0 | 1.6 |
| C. ex. 7 | C. pro. 7 | 2.8 | 2.8 | 1.2 | 1.4 |
| C. ex. 8 | C. pro. 8 | 2.2 | 1.6 | 1.4 | 1.4 |
| C. ex. 9 | C. pro. 9 | 1.8 | 2.0 | 1.6 | 1.2 |
| C. ex. 10 | C. pro. 10 | 2.0 | 2.0 | 1.2 | 1.2 |
| C. ex. 11 | C. pro. 11 | 2.0 | 1.6 | 1.6 | 1.0 |
| C. ex. 12 | C. pro. 12 | 2.2 | 2.0 | 1.6 | 1.0 |
| C. ex. 13 | C. pro. 13 | 3.0 | 2.8 | 2.4 | 2.0 |
| C. ex. 14 | C. pro. 14 | 2.6 | 2.8 | 2.2 | 2.2 |
| C. ex. 15 | C. pro. 15 | 2.2 | 2.0 | 1.8 | 1.8 |

As is seen in Table 5, *kara-age* in which starch containing an oil and fat solidifier was used had a desired texture that had good crispiness and lightness after being fried for 30 minutes and microwaved. The effect of improving the texture was also confirmed in the *kara-age* prepared for working product 4 using hydrogenated coconut oil, in which the thickening effect of oil and fat was observed in Table 1 but was not observed in Table 3. *Kara-age* in which starch not containing an oil and fat solidifier was used had an undesired texture in terms of crispiness and lightness.

It was clear that comparative product 14 and comparative product 15, in which oil and fat solidifiers were mixed with edible powders without being fluidized, both had less of an effect after frying for 30 minutes and after microwaving than working product 1 and working product 14, which involved fluidized.

### [Test example 2: Kara-age (breader method, evaluation of fiber quality)]

10 parts by mass of working product 16 or comparative product 16, 90 parts by mass of cornstarch, and 100 parts by mass of commercially available *kara-age* powder were mixed, and a mixed powder was prepared. 0.1 parts by mass of xanthan gum and 130 parts by mass of ice-cold water were stirred into 100 parts by mass of the prepared mixed powder using a whipper to prepare a batter. Next, chicken breast meat with the skin and fat trimmed off was cut into 20 g pieces, 10 pieces of cut chicken breast meat and 20 g of the prepared mixed powder were mixed in a plastic bag with a zipper, and the chicken pieces were covered in powder. The powder-covered chicken breast meat was then covered in the prepared batter so that the amount of batter was 40% of the amount of meat, the prepared mixed powder was then uniformly sprinkled over all the pieces of meat, the pieces of meat were fried at 175°C for 4 minutes using refined soybean oil , and *kara-age* was prepared.

The texture evaluations were carried out using the same method as with test example 1. The results are shown in Table 6.

**[Table 6]**

| | Sample Name | After 30 min frying | | After microwaving | |
|---|---|---|---|---|---|
| | | Crispiness | Lightness | Crispiness | Lightness |
| W. ex. 16 | W. pro. 16 | 3.8 | 3.6 | 3.6 | 3.6 |
| C. ex. 16 | C. pro. 16 | 1.8 | 1.8 | 1.2 | 1.4 |

As is seen in Table 6, *kara-age* in which fiber containing an oil and fat solidifier was used, after being fried for 30 minutes and microwaved, had a desired texture that had good crispiness and lightness. *Kara-age* in which fiber not containing an oil and fat solidifier was used had an undesired texture in terms of crispiness and lightness.

### [Test example 3: kara-age (battering method)

100 parts by mass of working products 1 and 13-15 and comparative products 1-3 and 13 and 100 parts by mass of commercially available *kara-age* powder were mixed, and mixed powders were prepared. In each case, 0.4 parts by mass of xanthan gum and 110 parts by mass of ice-cold water were stirred into 100 parts by mass of the prepared mixed powder using a whipper to prepare a batter. Next, chicken breast meat with the skin and fat trimmed off was cut into 20 g pieces, the cut chicken breast meat was covered in the prepared batter so that the amount of batter was 40% of the amount of meat, the pieces of meat were fried at 175°C for 4 minutes using refined soybean oil, and *kara-age* was prepared.

100 parts by mass of comparative product 1 and 100 parts by mass of commercially available *kara-age* powder were mixed, and a mixed powder was prepared. 0.4 parts by mass of xanthan gum and 110 parts by mass of ice-cold water were stirred into 100 parts by mass of the mixed powder using a whipper to prepare a batter, and then 5 parts by mass of oil and fat mixture prepared using the same method as working product 1 was added to the batter and mixed while stirring with a whipper. Using this mixture, *kara-age* was prepared in the same manner as described above.

The texture evaluations were carried out using the same method as with test example 1. The results are shown in Table 7.

**[Table 7]**

| | Sample Name | After 30 min frying | | After microwaving | |
|---|---|---|---|---|---|
| | | Crispiness | Lightness | Crispiness | Lightness |
| W. ex. 17 | W. pro. 1 | 4.2 | 4.0 | 4.0 | 4.0 |
| W. ex. 18 | W. pro. 13 | 4.8 | 4.6 | 4.6 | 4.6 |
| W. ex. 19 | W. pro. 14 | 4.0 | 4.0 | 3.8 | 3.8 |
| W. ex. 20 | W. pro. 15 | 3.8 | 4.0 | 3.2 | 3.6 |
| C. ex. 17 | C. pro. 1 | 1.2 | 1.0 | 1.0 | 1.0 |
| C. ex. 18 | C. pro. 2 | 1.8 | 1.8 | 1.6 | 1.2 |
| C. ex. 19 | C. pro. 3 | 2.0 | 1.8 | 1.2 | 1.4 |
| C. ex. 20 | C. pro. 13 | 2.2 | 2.6 | 1.4 | 1.8 |
| C. ex. 21 | C. pro. 1 + oil and fat mixture used in w. ex. 1 | 2.2 | 2.2 | 1.4 | 1.6 |

As is seen in Table 7, with batter-type *kara-age* as well, there was a desired texture that had good crispiness and lightness after frying for 30 minutes and after microwaving in samples with which a processed edible powder containing an oil and fat solidifier was used. In addition, in samples with which a processed edible powder not containing an oil and fat solidifier was used, the texture was undesirable in terms of crispiness and lightness. Furthermore, in comparative example 21, in which the oil and fat mixture used in working example 1 was added directly to the batter liquid, no effect of improving the texture was observed, and it is therefore understood that it is important to make the edible powder contain an oil and fat solidifier in advance.

## Claims

1. A processed edible powder **characterized in** containing an edible powder formed from a starchy and/or fibrous raw material, and an oil and fat solidifier mixed into the edible powder.

2. The processed edible powder according to claim 1, containing 0.01-20 parts by mass of the oil and fat solidifier per 100 parts by mass of the edible powder.

3. The processed edible powder according to claim 1 or 2, wherein after 20.0 g of the oil and fat solidifier has been added to 20.0 g of canola oil and the resulting combination has been heated in a boiling water bath for 20 minutes, the viscosity of the resulting oil and fat mixture when cooled to 25°C in a resting state is 340 mPa·s or more, or said resulting oil and fat mixture makes gelation.

4. The processed edible powder according to any one of claims 1 to 3, wherein after 2.0 g of the oil and fat solidifier has been added to 38.0 g of canola oil and the resulting combination has been heated in a boiling water bath for 10 minutes, the viscosity of the resulting oil and fat mixture when cooled to 25°C in a resting state is 170 mPa·s or more, or said resulting oil and fat mixture makes gelation.

5. A method for manufacturing a processed edible powder, **characterized in that** an oil and fat solidifier is mixed with an edible powder formed from a starchy and/or fibrous raw material.

6. The method for manufacturing a processed edible powder according to claim 5, **characterized in that** 0.01-20 parts by mass of the oil and fat solidifier is mixed with 100 parts by mass of the edible powder.

7. The method for manufacturing a processed edible powder according to claim 5 or 6, wherein after 20.0 g of the oil and fat solidifier has been added to 20.0 g of canola oil and the resulting combination has been heated in a boiling water bath for 20 minutes, the viscosity of the resulting oil and fat mixture when cooled to 25°C in a resting state is 340 mPa·s or more, or said resulting oil and fat mixture makes gelation.

8. The method for manufacturing a processed edible powder according to any one of claims 5 to 7, wherein after 2.0 g of the oil and fat solidifier has been added to 38.0 g of canola oil and the resulting combination has been heated in a boiling water bath for 10 minutes, the viscosity of the resulting oil and fat mixture when cooled to 25°C in a resting state is 170 mPa·s or more, or said resulting oil and fat mixture makes gelation.

9. The method for manufacturing a processed edible powder according to any one of claims 5 to 8, wherein the oil and fat solidifier is fluidized and mixed with the edible powder.

10. A fried-food coating **characterized in** containing the processed edible powder according to any one of claims 1 to 4 is contained.

11. A method for manufacturing a fried-food coating, **characterized in that** the method involves compounding a processed edible powder obtained through the method for manufacturing a processed edible powder according to any one of claims 5 to 9.

12. A method for improving the texture of a fried-food coating, **characterized in that** the processed edible powder according to any one of claims 1 to 4 is added.

13. A method for improving the texture of a fried-food coating, **characterized in that** a processed edible powder obtained through the method for manufacturing a processed edible powder according to any one of claims 5 to 9 is added.
